# EUROPEAN PATENT APPLICATION

(11) **EP 2 381 358 A1**
(43) Date of publication of application: **26.10.2011**
(21) Application number: 11163655.1
(22) Date of filing: 26.04.2011
(51) Int. Cl.: G06F 9/44

(54) **Method for guiding operation of application program, mobile electronic device, and computer program product using the method thereof**

(30) Priority: 26.04.2010 US 327725 P; 20.04.2011 US 90256
(71) Applicant: HTC Corporation, Taoyuan County 330 (TW)
(72) Inventor: Chu, Yen-Lee, 330, Taoyuan City, Taoyuan County (TW); Chen, Chi-Nien, 330, Taoyuan City, Taoyuan County (TW)
(74) Representative: 2K Patentanwälte Blasberg Kewitz & Reichel

(57) **Abstract**

A method for guiding an operation of an application program, a mobile electronic device, and a computer program product using the method thereof are provided. In the invention, a description page with a plurality of links of an operation guide is opened. An operation interface of the application program is displayed when one of the links is clicked, and a frame of the operation interface is shifted to an operation region corresponding to the clicked link. A switching option is generated in a status bar and linked to the description page. The description page is switched from the operation interface when the switching option is clicked.

## Description

### BACKGROUND OF THE INVENTION

### FIELD OF THE INVENTION

The invention relates to a method of operating a mobile electronic device. More particularly, the invention relates to a method of guiding an operation of an application program and a mobile electronic device using the method.

### DESCRIPTION OF RELATED ART

With the rapid progression in information technology, cellular phones, computers, and personal digital assistants (PDAs) can now be seen everywhere. These products satisfy people's needs in every aspect such that people become more dependent on information products as the days go by. Up to this point, information products have become inseparable from people's daily lives. Functions of information products have been updated continually with the advancement in electronic technology and related manufacturing techniques. In this fast-paced society, people now demand for timely communication. As a consequence, cellular phones have gradually replaced traditional phones and become one of the most convenient tools for interpersonal communication due to their portability and convenience.

Generally, when the user uses the application programs in his/her cellular phone, he/she usually seeks for assistance in the operation guide built-in in the cellular phone (or online) and uses the application programs subsequently according to the description in the operation guide. When utilizing the operation guide, the user needs to exit the interface of the application program currently operating to enter the relating interface of the operation guide for browsing. However, the user is stopped from operating the application program and, after reading the operation guide, has to pick up from the step he/she left after exiting from the operation guide and returning to the original application program. For example, after reading the operation guide and returning to the application program to operate, the user tends to forget the correct steps for carrying out the execution which makes the operation inconvenient.

### SUMMARY OF THE INVENTION

The invention is related to a method of guiding an operation of an application program, where the method is capable of switching between an application program and an operation guide.

The invention is directed to a mobile electronic device linking an operation guide and an application program of the mobile electronic device by establishing linkable documents.

The invention is directed to a method of guiding an operation of an application program suitable for a mobile electronic device. In the method, a description page of an operation guide is opened. The description page is configured to guide a method of operating an application program and includes a plurality of links. An operation interface of the application program is displayed when any one of the links is clicked and the operation interface is shifted to an operation region corresponding to the link clicked. A switching option is generated in a status bar, where the switching option is linked to the description page. The operation interface is switched to the description page when the switching option is clicked.

In one embodiment of the invention, before the description page of the operation guide is opened, a search string is received, an item matching the search string is searched from a plurality of guiding items from the operation guide, and a search result is listed. The description page is opened when the search result includes one of the guiding items and the guiding item is clicked.

In one embodiment of the invention, when any one of the links is clicked, a browsing location where the description page is currently located is memorized. Accordingly, the browsing location that a user was visiting before switching the description page is returned from the operation interface when the switching option is clicked.

In one embodiment of the invention, the description page includes a plurality of operations of the application program. Each of the operations corresponds to one of the links respectively, and each of the links is linked to the corresponding operation region of the corresponding operation in the operation interface respectively.

The invention is further directed to a mobile electronic device including a display unit, an input unit, and a processing unit. The display unit is configured to display a frame. The input unit is configured to receive an input of a user. The processing unit is coupled to the display unit and the input unit respectively. The processing unit is configured to open a description page of an operation guide and to display the description page in the display unit. The description page is configured to guide a method of operating an application program and includes a plurality of links. When any one of the links is clicked, the processing unit displays an operation interface of the application program in the display unit and shifts a frame of the display unit to an operation region corresponding to the link clicked. The processing unit generates a switching option configured to be linked to the description page in a status bar. The processing unit switches the frame of the display unit from the operation interface to the description page when the switching option is clicked.

In one embodiment of the invention, the mobile electronic device further includes a search button. The processing unit displays a search interface in the display unit when the search button is enabled so as to receive a search string through the search interface. The processing unit searches an item matching the search string in a storage unit and lists a search result when the search string is received. Here, the storage unit includes a plurality of guiding items of the operation guide. The description page is opened when the search result includes one of the guiding items and the guiding item is clicked.

In one embodiment of the invention, the processing unit memorizes a browsing location the user is currently at when any one of the links is clicked. The processing unit then returns to the browsing location the user was at before switching the description page when switching from the operation interface to the description page.

In one embodiment of the invention, the display unit and the input unit are integrated as a touch screen.

The invention is further directed to a computer program product storing a plurality of program instructions for loading into a mobile electronic device to execute the method of guiding the operation of the application program aforementioned. The computer program product is basically composed by a plurality of program code snippets (e.g. building organization chart program code snippet, document approving program code snippet, setting program code snippet, and deploying program code snippet). Moreover, after the program code snippets are loaded into the mobile electronic device and executed by the same, the steps of the method of guiding the operation of the application program and the functions of the mobile electronic device can be completed.

In light of the foregoing, the invention allows the user to return to the description page rapidly while operating the application program. Hence, the user can learn the operation of the application program while carrying out the steps and understand the correct functions of the mobile electronic device rapidly and directly.

In order to make the aforementioned and other features and advantages of the invention more comprehensible, several embodiments accompanied with figures are described in detail below.

### BRIEF DESCRIPTION OF THE DRAWINGS

The accompanying drawings are included to provide further understanding, and are incorporated in and constitute a part of this specification. The drawings illustrate embodiments and, together with the description, serve to explain the principles of the invention.

Fig. 1 is a block diagram illustrating a mobile electronic device according to a first embodiment of the invention.

Fig. 2 shows a flowchart of a method of guiding an operation of an application program according to the first embodiment of the invention.

Fig. 3 is a schematic diagram illustrating a mobile electronic device according to a second embodiment of the invention.

Fig. 4 depicts a flowchart of a method of guiding an operation of an application program according to the second embodiment of the invention.

Figs. 5A to 5E illustrate steps of guiding the operation of the application program according to the second embodiment of the invention.

### DESCRIPTION OF EMBODIMENTS

When operating a cellular phone, a user sometimes doesn't know how to use an application program. Although the cellular phone includes an operation guide which is built-in for the user's reference, the user has to know where to open the operation guide when encountering problems. However, the user often forgets the correct steps of execution after reading the operation guide and then returning to the application program for operation. Therefore, the invention is directed to a method of guiding an operation of an application program and a mobile electronic device capable of switching between an application program and an operation guide. The user can thus operate the application program while browsing the operation guide. For the invention to be more comprehensible, several embodiments are provided below as implementations of the invention.

### First Embodiment

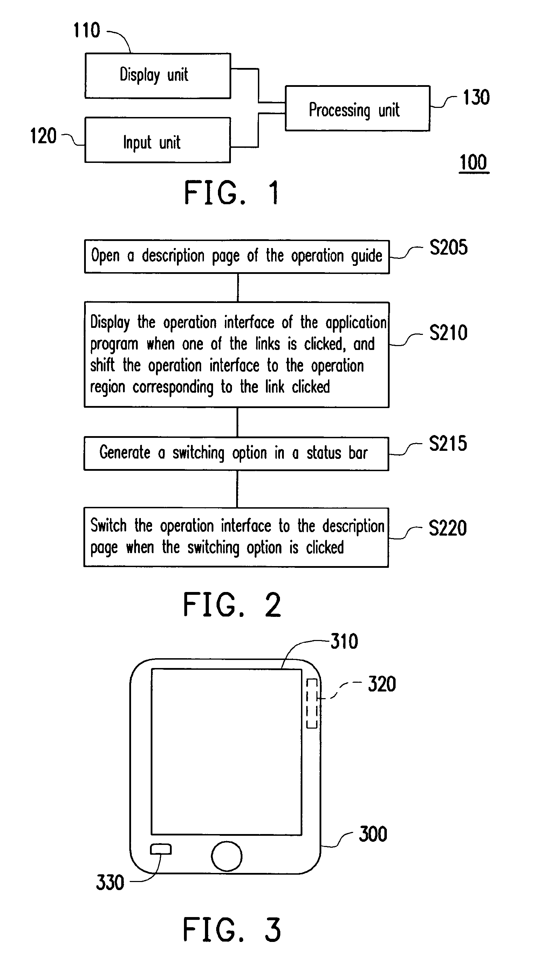

Fig. 1 is a block diagram illustrating a mobile electronic device according to a first embodiment of the invention. Referring to Fig. 1, a mobile electronic device 100 includes a display unit 110, an input unit 120, and a processing unit 130. The processing unit 130 is coupled to the display unit 110 and the input unit 120 respectively. Here, the display unit 110 may be, for example, a screen, for displaying a frame. The input unit 120 is a touch panel or keyboard, for example, for receiving an input of a user. In other embodiments, the display unit 110 and the input unit 120 may be integrated as a touch screen to display a frame and receive an input of a user. The processing unit 130 opens an operation guide according to the input received by the input unit 120 and switches between the operation guide and an application program.

A method of guiding an operation of an application program is illustrated in details using the mobile electronic device 100. Fig. 2 shows a flowchart of a method of guiding an operation of an application program according to the first embodiment of the invention. Referring to Figs. 1 and 2, in step S205, a description page of the operation guide is opened by the processing unit 130. The operation guide can be built-in in a storage unit (not shown) in the mobile electronic device 100 and can also be stored in a server and connected to the server through internet for access to the operation guide. However, the operation guide is not limited thereto.

Further, the description page records a plurality of descriptions of a plurality of operations of the application program. The description of each of the operations corresponds to one of the links respectively. Each of the links is linked to the corresponding operation region of the corresponding operation in the operation interface. For example, when the description page is established, a link is established in a corresponding description of the description page according to a corresponding operation region of the operation of the application program in an operation interface, so as to link this link to the corresponding operation region in the operation interface.

In step S210, the operation interface of the application program is displayed when one of the links is clicked and the operation interface is shifted to the operation region corresponding to the link clicked. For example, the operation interface includes a plurality of operation regions and each of the operation regions has the corresponding operation. When the operation interface is displayed in the display unit 110 through the link in the description page, the operation region corresponding to the clicked link is placed above the frame of the display unit 110. Alternatively, a vernier is shifted to the operation region corresponding to the clicked link. Or, the operation region corresponding to the clicked link is marked for the user to recognize the operation region for operation immediately. Accordingly, after browsing the operation guide, the user can switch to the operation interface to operate according to the operation described in the description page.

Here, when any one of the links is clicked by the user, the processing unit 130 memorizes a browsing location where the user is currently located in the description page, so that the user can return to this browsing location subsequently.

In step S215, a switching option is generated in a status bar. The switching option is configured to link to the description page. In other words, when any one of the links in the description page is clicked, the processing unit 130 adds a new switching option to the status bar. Also, the processing unit 130 can set an address to be linked by the switching option as the browsing location the user is currently at in the description page. The status bar can be set as hidden under normal conditions and is only displayed in the frame of the display unit 110 by the processing unit 130 when a scroll-down instruction is received.

Afterwards, in step S220, the processing unit 130 switches the frame of the display unit 110 from the operation interface to the description page when the switching option is clicked. That is, when the user is operating at the operation interface and doesn't know how to proceed to the next step, the user can click the switching option in the status bar to switch back to the description page for browsing the next operation. Since the processing unit 130 memorizes the browsing location before switching the description page in step S210, the browsing location that the user visiting at before switching the description page can be returned to when the switching option is clicked.

As a result, the user can switch back to the description page of the operation guide rapidly while operating the application program with the assistance of the switching option.

### Second Embodiment

Fig. 3 is a schematic diagram illustrating a mobile electronic device according to a second embodiment of the invention. Referring to Fig. 3, in the present embodiment, a mobile electronic device 300 includes a touch screen 310, a processing unit 320 (shown in dotted lines as built-in in the mobile electronic device 300), and a search button 330. The touch screen 310 is configured to display a frame and receive an input of a user and the processing unit 320 executes a method of guiding an operation of an application program below according to the input received by the touch screen 310.

In the present embodiment, the processing unit 320 displays a search interface in the touch screen 310 when the search button 330 is enabled so as to receive a search string through the search interface. In the present embodiment, the search button 330 can be enabled anytime and anywhere to perform a search. The processing unit 320 searches an item matching the search string in a storage unit (not shown) and lists a search result when the search string is received. Here, the storage unit records a plurality of guiding items of the operation guide. The description page is opened when the search result includes one of the guiding items and the guiding item is clicked.

In other embodiments, instead of installing a physical button on the mobile electronic device 300 as the search button 330, a search option (or a virtual button) is installed in a main frame of the mobile electronic device 300 to open a search interface through the search option to perform a search.

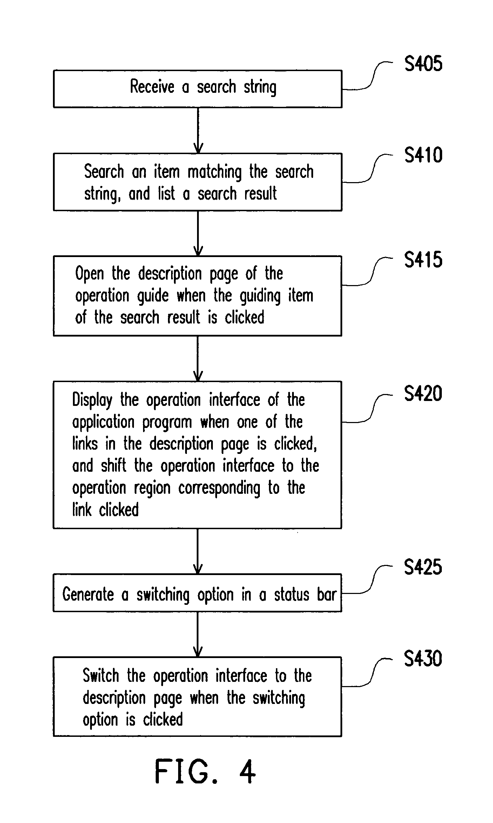

The method of guiding the operation of the application program is illustrated in details using the mobile electronic device 300. Fig. 4 depicts a flowchart of a method of guiding an operation of an application program according to the second embodiment of the invention. Referring to Figs. 3 and 4 simultaneously, in step S405, when the search button 330 is enabled, a search interface is opened to receive a search string. In other words, the mobile electronic device 300 can perform a search in any condition by opening the search interface to receive the search string. For instance, when encountering unfamiliar functions while operating the application program, the user can open the search interface anytime to input the search string so as to search whether a corresponding description page is available in the operation guide.

In step S410, an item matching the search string is searched and a search result is listed. For example, an item matching the search string is searched in the storage unit. Here, the storage unit not only records a plurality of application program items, but also records a plurality of guiding items of the operation guide. For example, assuming the application programs in the mobile electronic device 300 include a message program, an e-mail program, and a music player program, and the items in the application programs are all recorded in the storage unit and an operation guide is built-in in the mobile electronic device 300. When a search is performed with a search string for "message," the processing unit 320 searches the message program, the e-mail program, the music player program, and the operation guide respectively to find the items matching the search string of "message".

In step S415, when the search result includes any one of the guiding items and the guiding item is clicked, the processing unit 320 opens the description page of the operation guide. That is, when the search result includes a guiding item and the user clicks the guiding item, the description page of the operation guide is then opened.

In step S420, the operation interface of the application program is displayed when any one of the links in the description page is clicked and a frame of the operation interface is shifted to the operation region corresponding to the link clicked. Thereafter, in step S425, a switching option linking to the description page is generated in the status bar. In step S430, the operation interface is switched to the description page when the switching option is clicked. In the present embodiment, steps S420-S430 and steps S210-S220 in the first embodiment have identical or similar functions, and the details are thus omitted hereinafter.

In summary, in the embodiment mentioned above, the operation guide can be opened through the search interface and the application program is then linked from the operation guide. Moreover, a switching option is generated in the status bar for switching from the application program back to the operation guide through the switching option when executing the application program. Accordingly, when the user faces operation problems while operating the application program, the user can find the corresponding description page in the operation guide by searching for the keyword. The user can then link to the corresponding application program from the description of the operation in the description page directly when browsing the description page so as to operate the application program and browse the operation guide at the same time. Also, a switching option is generated after linking to the application program to link the switching option to the description page.

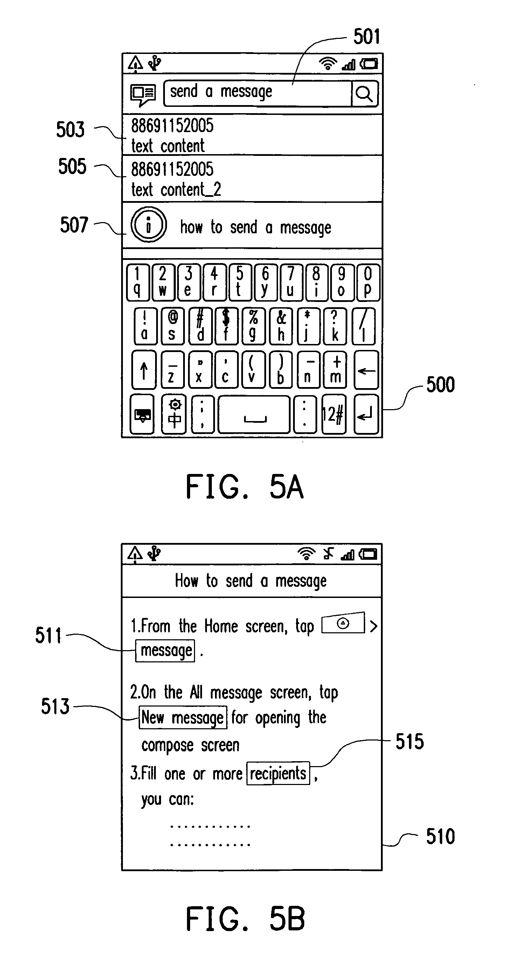

In the following, another embodiment is illustrated with an application program for sending messages. Figs. 5A to 5E illustrate steps of guiding the operation of the application program according to the second embodiment of the invention. Referring to Fig. 3 and Figs. 5A-5E, when the search button 330 is enabled, a search interface 500 is opened. In the present embodiment, the search interface 500 includes a search bar 501 to receive a search string therefrom. Here, assuming a search is performed with the search string for "sending a message", the processing unit 320 then searches for an item matching the search string in the storage unit and lists a search result. After the search is carried out, the search result is displayed in the search interface 500. The search result includes an item 503, an item 505, and an item 507. The item 503 and the item 505 are items in the message application program and the item 507 is the guiding item in the operation guide.

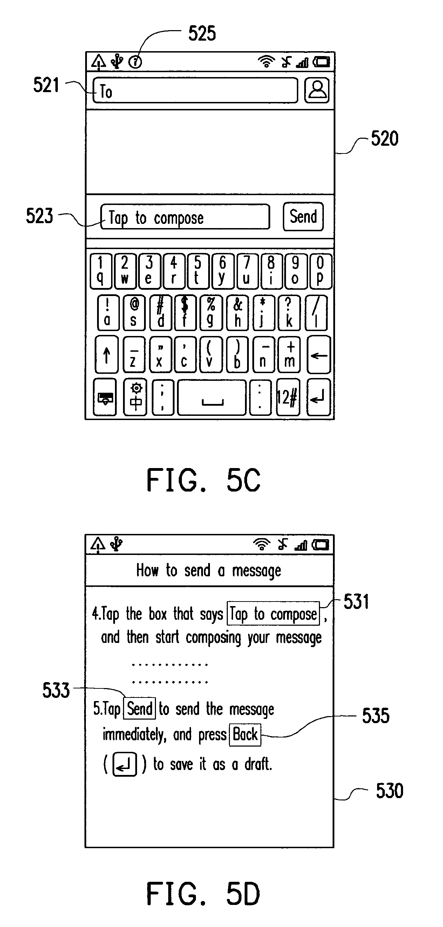

When the user clicks the item 507, the processing unit 320 displays a description page 510 of the operation guide in the touch screen 310 as shown in Fig. 5B. In Fig. 5B, the description page 510 records a plurality of detailed descriptions of operations illustrating how to send a message. Each of the descriptions has a link, for example, a link 511, a link 513, and a link 515. The link 511 is linked to a main frame of the message application program. The link 513 is linked to a frame of new messages in the operation interface (assuming the operation interface has a plurality of frames each representing a different function) as shown in Fig. 5C. The link 515 is linked to the operation region for inputting a recipient, such as an operation region 521 in Fig. 5C.

Assuming the user clicks the link 513 to write a new message, the processing unit 320 then switches the frame of the touch screen 310 to an operation interface 520 of the message application program according to the setting of the link 513 as depicted in Fig. 5C. In Fig. 5C, the operation interface 520 includes the operation region 521 and an operation region 523. A switching option is generated in the status bar when the link 513 in the description page 510 is clicked for switching to the operation interface 520. In Fig. 5C, an option 525 is a switching option, for instance. When the user clicks the option 525, the frame of the touch screen 310 switches from the operation interface 520 back to the description page 510. That is, the description page 510 in the operation guide can be opened through the search interface 500. The operation interface 520 of the application program can be switched to directly from the description page 510. Also, the operation interface 520 can be switched back to the description page 510 directly.

In the present embodiment, the detailed descriptions of the subsequent operations can be browsed by scrolling-down the description page 510 in Fig. 5B to attain a description page 530 depicted in Fig. 5D. The description page 530 includes a link 531, a link 533, and a link 535. Since the link 531, the link 533, and the link 535 belong to the same operation, the link 531, the link 533, and the link 535 all correspond to the operation region 523 in Fig. 5C.

In Fig. 5C, the operation region 521 corresponds to the link 515, the operation region 523 corresponds to the links 531, 533, and 535. For example, when the link 515 in the description page 510 is clicked, the vernier remains in the operation region 521 when switching to the operation interface 520; when the link 531 in the description page 530 is clicked, the vernier remains in the operation region 523 when switching to the operation interface 520.

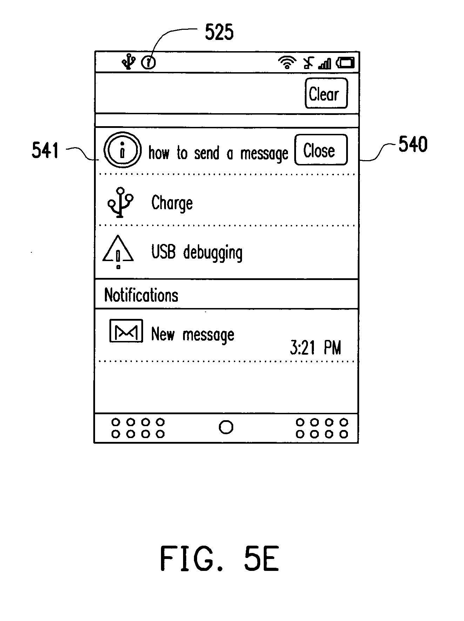

In addition, the option 525 is further configured to open a notification interface 540 as shown in Fig. 5E. For instance, the notification interface 540 is configured to list a plurality of notifications of the application programs. When the link 513 in the description page 510 is clicked to switch to the operation interface 520, a switching option 541 is generated in the notification interface 540 for switching to the description page 510 through the switching option 541.

Accordingly, the description page and the operation interface can be switched rapidly through the embodiments aforementioned for guiding the user to operate the application program.

The invention is further directed to a computer program product including a plurality of program instructions configured to execute the method of guiding the operation of the application program. The computer program product is basically composed by a plurality of program code snippets (e.g. building organization chart program code snippet, document approving program code snippet, setting program code snippet, and deploying program code snippet). After the program code snippets are loaded into the mobile electronic device and executed by the same, the steps of the method of guiding the operation of the application program is completed.

In summary, the invention links the operation guide and the application program of the mobile electronic device by establishing linkable documents. When the user faces operation problems of the mobile electronic device, the user can search for a keyword to find the corresponding operation guide under different application programs to solve the problem above. Furthermore, the user can link to the corresponding application program from the description page in the operation guide directly when browsing the operation guide so as to operate the application program and browse the operation guide at the same time. After linking to the application program, the relevant links in the operation guide are temporarily stored in the status bar, such that the user can return to the browsing region he/she was at in the description page while operating the application program. Hence, the user can learn the operation of the application program while carrying out the steps and understand the correct functions of the mobile electronic device rapidly and directly.

It will be apparent to those skilled in the art that various modifications and variations can be made to the structure of the disclosed embodiments without departing from the scope or spirit of the disclosure. In view of the foregoing, it is intended that the disclosure cover modifications and variations of this disclosure provided they fall within the scope of the following claims and their equivalents.

## Claims

1. A method of guiding an operation of an application program suitable for a mobile electronic device (100, 300), the method comprising:
opening (S205) a description page (510, 530) of an operation guide, wherein the description page (510, 530) is configured to guide a method of operating an application program and the description page (510, 530) comprises a plurality of links (511, 513, 515, 531, 533, 535);
displaying (S210) an operation interface (520) of the application program when any one of the links (511, 513, 515, 531, 533, 535) is clicked, and shifting the operation interface (520) to an operation region corresponding to the link clicked;
generating (S215) a switching option (541) in a status bar, wherein the switching option (541) is linked to the description page (510, 530); and
switching (S220) from the operation interface (520) to the description page (510, 530) when the switching option (525, 541) is clicked.

2. The method of guiding the operation of the application program as claimed in claim 1, wherein before the step of opening (S205) description page (510, 530) of the operation guide, the method further comprises:
receiving (S405) a search string;
searching (S410) an item matching the search string from a plurality of guiding items of the operation guide and listing a search result; and
opening (S415) the description page (510, 530) when the search result comprises one of the guiding items and the guiding item is clicked.

3. The method of guiding the operation of the application program as claimed in claim 1 or 2, wherein when any one of the links (511, 513, 515, 531, 533, 535) is clicked, the method further comprises:
memorizing a browsing location where the description page (510, 530) is currently located.

4. The method of guiding the operation of the application program as claimed in claim 3, wherein the step of switching (S220) from the operation interface (520) to the description page (510, 530) comprises:
returning to the browsing location a user was visiting before switching the description page (510, 530).

5. The method of guiding the operation of the application program as claimed in any one of claims 1 to 4, wherein the description page (510, 530) comprises a plurality of descriptions of a plurality of operations of the application program, each of the descriptions corresponds to one of the links (511, 513, 515, 531, 533, 535) respectively, and each of the links (511, 513, 515, 531, 533, 535) is linked to the corresponding operation region of the corresponding operation in the operation interface (520) respectively.

6. A mobile electronic device, comprising:
a display unit (110);
an input unit (120), receiving an input of a user;
a processing unit (130, 320), coupled to the display unit (110) and the input unit (120) respectively, the processing unit (130, 320) opening a description page (510, 530) of an operation guide and displaying the description page (510, 530) in the display unit (110), wherein the description page (510, 530) is configured to guide a method of operating an application program and comprises a plurality of links (511, 513, 515, 531, 533, 535) ,
wherein when any one of the links (511, 513, 515, 531, 533, 535) is clicked, the processing unit (130, 320) displays an operation interface (520) of the application program in the display unit (110) and shifts a frame of the display unit (110) to an operation region corresponding to the link clicked; and the processing unit (130, 320) generates a switching option (525, 541) configured to be linked to the description page (510, 530) in a status bar; the processing unit (130, 320) switches the frame of the display unit (110) from the operation interface (520) to the description page (510, 530) when the switching option (525, 541) is clicked.

7. The mobile electronic device as claimed in claim 6, further comprising:
a search button (330), the processing unit (130, 320) displaying a search interface (500) in the display unit (110) when the search button (330) is enabled to receive a search string through the search interface (500); the processing unit (130, 320) searching an item matching the search string in a storage unit and listing a search result when the search string is received, wherein the storage unit comprises a plurality of guiding items of the operation guide and the description page (510, 530) is opened when the search result comprises one of the guiding items and the guiding item is clicked.

8. The mobile electronic device as claimed in claim 6 or 7, wherein the processing unit (130, 320) memorizes a browsing location where the user is currently located when any one of the links (511, 513, 515, 531, 533, 535) is clicked, and the processing unit (130, 320) returns to the browsing location the user was visiting before switching the description page (510, 530) when switching from the operation interface (520) to the description page (510, 530).

9. The mobile electronic device as claimed in any one of claims 6 to 8, wherein the description page (510, 530) comprises a plurality of descriptions of a plurality of operations of the application program, each of the operations corresponds to one of the links (511, 513, 515, 531, 533, 535) respectively, and each of the links (511, 513, 515, 531, 533, 535) is linked to the corresponding operation region of the corresponding operation in the operation interface (520) respectively.

10. The mobile electronic device as claimed in any one of claims 6 to 9, wherein the display unit (110) and the input unit (120) are integrated as a touch screen (310).

11. A computer program product, storing a plurality of program instructions for loading into a mobile electronic device (100, 300) to execute the following:
opening a description page (510, 530) of an operation guide, wherein the description page (510, 530) is configured to guide a method of operating an application program and the description page (510, 530) comprises a plurality of links (511, 513, 515, 531, 533, 535);
displaying an operation interface (520) of the application program when any one of the links (511, 513, 515, 531, 533, 535) is clicked and shifting the operation interface (520) to an operation region corresponding to the link clicked;
generating a switching option (525, 541) in a status bar, wherein the switching option (525, 541) is linked to the description page (510, 530); and
switching from the operation interface (520) to the description page (510, 530) when the switching option (525, 541) is clicked.
